# EUROPEAN PATENT APPLICATION

(11) **EP 4 414 864 A1**
(43) Date of publication of application: **14.08.2024**
(21) Application number: 23870932.3
(22) Date of filing: 27.09.2023
(51) Int. Cl.: G06F 16/9535, G06F 40/289

(54) **INFORMATION ACQUISITION METHOD, DEVICE AND SYSTEM**

(30) Priority: 29.09.2022 CN 202211200568
(71) Applicant: Huawei Technologies Co., Ltd., Shenzhen, Guangdong 518129 (CN)
(72) Inventor: CAO, Kun, Shenzhen, Guangdong 518129 (CN); SHEN, Xin, Shenzhen, Guangdong 518129 (CN); LEONG, Chee Kai, Shenzhen, Guangdong 518129 (CN); HE, Jun, Shenzhen, Guangdong 518129 (CN)
(74) Representative: Gill Jennings & Every LLP
(86) International application number: PCT/CN2023/122063
(87) International publication number: WO 2024/067705

(57) **Abstract**

This application discloses an information obtaining method, a device, and a system, to conveniently, quickly, and centrally obtain information of a same subject or topic, and focus on specific hot spot information. Based on the solutions disclosed in this application, entity words may be automatically extracted from massive original information, a topic formed by combining a plurality of entity words may be automatically created, and specific hot spot information related to the topic may be aggregated. Therefore, when a user selects a specific topic, an information aggregation interface related to the topic is displayed to the user, to facilitate browsing of the user on an information overview. Further, when the user selects specific information, an original information content page of the information is displayed to the user.

## Description

This application claims priority to Chinese Patent Application No. 202211200568.9, filed with the China National Intellectual Property Administration on September 29, 2022 and entitled "INFORMATION OBTAINING METHOD, DEVICE, AND SYSTEM", which is incorporated herein by reference in its entirety.

### TECHNICAL FIELD

Embodiments of this application relate to the field of terminal application technologies, and in particular, to an information obtaining method, a device, and a system.

### BACKGROUND

Currently, as network information explosively increases, information content is also diverse. For information of a same subject or topic, because of different information sources, different focuses, different editing manners of editors, and the like, information content may also be different. Therefore, it takes a long time for a user to obtain the information of a same subject or topic.

News information is used as an example. If the user wants to obtain news information of a same subject or topic, the user needs to search for a plurality of related keywords one by one in a news application or a web page, or needs to search for a plurality of related keywords one by one in different news applications or web pages. This operation is cumbersome and time-consuming for the user. In addition, the news information obtained based on the foregoing conventional information search method is scattered and cannot be centrally read by the user.

### SUMMARY

This application provides an information obtaining method, a device, and a system, to conveniently, quickly, and centrally obtain information of a same subject or topic.

To achieve the foregoing objectives, the following technical solutions are used in embodiments of this application.

According to a first aspect, an information obtaining method is provided. The method includes: extracting a plurality of entity words and an associated word associated with the plurality of entity words from original information content; generating one or more topics based on the plurality of extracted entity words; and aggregating corresponding information related to the topic based on entity words and an associated word that correspond to the topic, where the one or more topics each include at least two entity words.

Entity words are keys in information, for example, a person name, a place name, an activity name, and an organization name. An associated word is a verb, a conjunction, an adjective, an adverb, or another word, a phrase, or the like that is associated with the entity words in the information. For example, in information "Company A acquires Company B", keys "Company A" and "Company B" are entity words, and "acquire" associated with both "Company A" and "Company B" is an associated word.

For example, the method may be applied to a server, for example, a server of a news application or a server having an information hot spot recommendation function.

According to the solution provided in the first aspect, keywords such as entity words and associated words are automatically extracted from massive original information, a topic is created by combining a plurality of entity words, and corresponding information related to the topic is aggregated based on entity words and an associated word that correspond to the topic, so that a user can directly access a specific topic to centrally access specific content related to the topic. In this method, the topic may be automatically created, the user does not need to search for related keywords one by one, a related phrase or sentence does not need to be manually configured, and an error in topic generation may be avoided. In addition, the created topic is formed by combining the plurality of entity words. Therefore, specific hot spot content may be located to avoid a problem that the topic covers an excessively wide range.

In a possible implementation, the method further includes: receiving a K1 value that is input by a first end user device, where the K1 value is used to specify a quantity of entity words of the one or more topics, and K1 is a positive integer greater than 1; and the generating one or more topics based on the plurality of extracted entity words includes: generating the one or more topics based on the plurality of extracted entity words, where the one or more topics each include K1 entity words. This application supports customized setting of a quantity of entity words forming a topic. Therefore, representativeness of the topic and a capability of aggregating information of the topic may be improved by adjusting the K1 value, and flexibility is high and adaptability is strong.

In a possible implementation, the method further includes: sending the one or more topics to a second end user device, where the one or more topics include a first topic; and in response to a selection request of the second end user device for the first topic, sending, to the second end user device, one or more pieces of information overview content corresponding to the first topic. In this application, after the topic is created, the created topic is displayed to the user by using an end user device (for example, a mobile phone) for browsing and selection by the user. After the user selects a specific topic, all information overview content related to the topic is centrally displayed to the user by using the end user device (for example, the mobile phone). For example, the second end user device may display, in a form of a list, the one or more pieces of information overview content corresponding to the first topic. Based on this, the user does not need to search for related keywords one by one, and may directly access a specific topic to centrally access specific content related to the topic. An operation is convenient and user experience is good.

In a possible implementation, the method further includes: sending, based on the request (that is, the selection request of the second end user device for the first topic), an information link corresponding to the first topic to the second end user device, where the information link is used to associate an original information content page corresponding to the one or more pieces of information overview content. For example, when the user selects any one of pieces of information overview content in an information overview content list, the second end user device may enter a corresponding original information content page by using a corresponding information link, so that the user can view original information content conveniently.

In a possible implementation, the method further includes: receiving a K2 value that is input by the first end user device, where K2 is a positive integer greater than 1, and K2 ≠ K1; and the generating one or more topics based on the plurality of extracted entity words further includes: generating the one or more topics based on the plurality of extracted entity words, where the one or more topics each include K2 entity words. Based on this, during creation, a plurality of topics formed by combining different quantities of entity words may be created for same original information, so that the user can select a topic based on an actual focus requirement conveniently.

In a possible implementation, the extracting a plurality of entity words and an associated word from original information content includes: extracting the plurality of entity words and the associated word from the original information content by using a language model, where the language model includes a semantic vector model, an entity word recognition model, and an associated word recognition model. Based on this, the entity words and the associated word may be automatically extracted from massive original information, to support creation of a topic and aggregation of information related to the topic. In addition, in this method, a related phrase or sentence does not need to be manually configured, and an error in topic generation may be avoided.

For example, the language model may be obtained by training a server based on a large amount of training data.

For example, the semantic vector model is, for example, a BERT (bidirectional encoder representations from transformers) model, a robustly optimized BERT approach (robustly optimized BERT approach, RoBERTa) model, an A lite BERT (A lite BERT, ALBERT) model, an enhanced representation through knowledge integration (enhanced representation through knowledge integration, ERNIE) model, or an ELECTRA (efficiently learning an encoder that classifies token replacements accurately) model.

In a possible implementation, the method further includes: obtaining original information from one or more channels based on a crawler information obtaining technology, where the original information includes the original information content and a corresponding information link. Based on this, a large amount of original information may be automatically collected from different channels, and a loss of hot spot information may be avoided.

In a possible implementation, the method is used to obtain news information, the original information content is original news content, and the first topic is a news topic. In an application scenario, the solution provided in this application may be used to create the news topic based on the news information. However, the solution may alternatively be used to create a topic based on another type of information, for example, a social media speech, a thesis, or a network article. This is not limited in this application.

According to a second aspect, an information obtaining method is provided. The method is applied to an end user device, for example, a second end user device. The method includes: the second end user device receives one or more topics from a server, where the one or more topics each include at least two entity words; and the second end user device displays the one or more topics.

According to the solution provided in the second aspect, the second end user device displays, to a user, one or more topics that are created by the server and that include a plurality of entity words, so that inconvenience caused to the user by searching for related keywords one by one by the user may be avoided, and specific hot spot content may be located, to avoid a problem that the topic covers an excessively wide range.

In a possible implementation, the method further includes: in response to a selection operation of the user on a first topic in the one or more topics, the second end user device sends a request message to the server, where the request message is used to request one or more pieces of information overview content corresponding to the first topic; the second end user device receives the one or more pieces of information overview content corresponding to the first topic from the server; and the second end user device displays an information overview content list, where the list includes the one or more pieces of information overview content corresponding to the first topic. Based on this, the user does not need to search for related keywords one by one, and may directly access a specific topic to centrally access specific content related to the topic. An operation is convenient and user experience is good.

In a possible implementation, the request message is further used to request an information link corresponding to the first topic, where the information link is used to associate an original information content page corresponding to the one or more pieces of information overview content. Based on this, a corresponding original information content page may be associated by using a corresponding information link, so that the user can view original information content conveniently. In a possible implementation, the method further includes: in response to an operation of selecting first information overview content in the information overview content list by the user, the second end user device is associated with a corresponding original information content page by using an information link corresponding to the first information overview content. Based on this, a corresponding original information content page may be entered by using a corresponding information link, so that the user can view original information content conveniently.

In a possible implementation, the method is used to obtain news information, and the first topic is a news topic. In an application scenario, the solution provided in this application may be used to create the news topic based on the news information. However, the solution may alternatively be used to create a topic based on another type of information, for example, a social media speech, a thesis, or a network article. This is not limited in this application.

According to a third aspect, a server is provided. The server includes: a key information extraction unit, configured to extract a plurality of entity words and an associated word associated with the plurality of entity words from original information content; and a topic creation unit, configured to generate one or more topics based on the plurality of extracted entity words, and aggregate corresponding information related to the topic based on entity words and an associated word that correspond to the topic, where the one or more topics each include at least two entity words.

According to the solution provided in the third aspect, the server automatically extracts keywords such as entity words and associated words from massive original information, creates a topic by combining a plurality of entity words, and aggregates corresponding information related to the topic based on entity words and an associated word that correspond to the topic, so that a user can directly access a specific topic to centrally access specific content related to the topic. In this method, the topic may be automatically created, the user does not need to search for related keywords one by one, a related phrase or sentence does not need to be manually configured, and an error in topic generation may be avoided. In addition, the created topic is formed by combining the plurality of entity words. Therefore, specific hot spot content may be located to avoid a problem that the topic covers an excessively wide range.

In a possible implementation, the server further includes: a K value input unit, configured to receive a K1 value that is input by a first end user device, where the K1 value is used to specify a quantity of entity words of the one or more topics, and K1 is a positive integer greater than 1; and that the topic creation unit generates one or more topics based on the plurality of extracted entity words includes: the topic creation unit generates the one or more topics based on the plurality of extracted entity words, where the one or more topics each include K1 entity words. This application supports customized setting of a quantity of entity words forming a topic. Therefore, representativeness of the topic and a capability of aggregating information of the topic may be improved by adjusting the K1 value, and flexibility is high and adaptability is strong.

In a possible implementation, the server further includes: an output unit, configured to: send one or more topics to a second end user device, where the one or more topics include a first topic; and in response to a selection request of the second end user device for the first topic, send, to the second end user device, one or more pieces of information overview content corresponding to the first topic. In this application, after the topic is created, the created topic is displayed to the user by using an end user device (for example, a mobile phone) for browsing and selection by the user. After the user selects a specific topic, all information overview content related to the topic is centrally displayed to the user by using the end user device (for example, the mobile phone). For example, the second end user device may display, in a form of a list, the one or more pieces of information overview content corresponding to the first topic. Based on this, the user does not need to search for related keywords one by one, and may directly access a specific topic to centrally access specific content related to the topic. An operation is convenient and user experience is good.

In a possible implementation, the output unit is further configured to: send, based on the request (that is, the selection request of the second end user device for the first topic), an information link corresponding to the first topic to the second end user device, where the information link is used to associate an original information content page corresponding to the one or more pieces of information overview content. For example, when the user selects any one of pieces of information overview content in an information overview content list, the second end user device may enter a corresponding original information content page by using a corresponding information link, so that the user can view original information content conveniently.

In a possible implementation, the K value input unit is further configured to: receive a K2 value that is input by the first end user device, where K2 is a positive integer greater than 1, and K2 ≠ K1; and that the topic creation unit generates one or more topics based on the plurality of extracted entity words further includes: the topic creation unit generates the one or more topics based on the plurality of extracted entity words, where the one or more topics each include K2 entity words. Based on this, during creation, a plurality of topics formed by combining different quantities of entity words may be created for same original information, so that the user can select a topic based on an actual focus requirement conveniently.

In a possible implementation, that the topic creation unit exacts a plurality of entity words and an associated word from original information content includes: the topic creation unit extracts the plurality of entity words and the associated word from the original information content by using a language model, where the language model includes a semantic vector model, an entity word recognition model, and an associated word recognition model. Based on this, the entity words and the associated word may be automatically extracted from massive original information, to support creation of a topic and aggregation of information related to the topic. In addition, in this method, a related phrase or sentence does not need to be manually configured, and an error in topic generation may be avoided.

In a possible implementation, the server further includes a training unit, configured to obtain the language model by training a large amount of training data.

In a possible implementation, the server further includes: an information obtaining unit, configured to obtain original information from one or more channels based on a crawler information obtaining technology, where the original information includes the original information content and a corresponding information link. Based on this, a large amount of original information may be automatically collected from different channels, and a loss of hot spot information may be avoided.

In a possible implementation, the original information content is original news content, and the first topic is a news topic. In an application scenario, the solution provided in this application may be used to create the news topic based on the news information. However, the solution may alternatively be used to create a topic based on another type of information, for example, a social media speech, a thesis, or a network article. This is not limited in this application.

According to a fourth aspect, an end user device is provided, for example, a second end user device. The second end user device includes: a communication unit, configured to receive one or more topics from a server, where the one or more topics each include at least two entity words; and a display unit, configured to display the one or more topics.

According to the solution provided in the fourth aspect, the second end user device displays, to a user, one or more topics that are created by the server and that include a plurality of entity words, so that inconvenience caused to the user by searching for related keywords one by one by the user may be avoided, and specific hot spot content may be located, to avoid a problem that the topic covers an excessively wide range.

In a possible implementation, the communication unit is further configured to: in response to a selection operation of the user on a first topic in the one or more topics, send a request message to the server, where the request message is used to request one or more pieces of information overview content corresponding to the first topic; and receive the one or more pieces of information overview content corresponding to the first topic from the server. The display unit is further configured to: display an information overview content list, where the list includes the one or more pieces of information overview content corresponding to the first topic. Based on this, the user does not need to search for related keywords one by one, and may directly access a specific topic to centrally access specific content related to the topic. An operation is convenient and user experience is good.

In a possible implementation, the request message is further used to request an information link corresponding to the first topic, where the information link is used to associate an original information content page corresponding to the one or more pieces of information overview content. Based on this, a corresponding original information content page may be entered by using a corresponding information link, so that the user can view original information content conveniently.

In a possible implementation, the display unit is further configured to: in response to an operation of selecting first information overview content in the information overview content list by the user, display a corresponding original information content page associated by using an information link corresponding to the first information overview content. Based on this, a corresponding original information content page may be entered by using a corresponding information link, so that the user can view original information content conveniently.

In a possible implementation, the first topic is a news topic. In an application scenario, the solution provided in this application may be used to create the news topic based on the news information. However, the solution may alternatively be used to create a topic based on another type of information, for example, a social media speech, a thesis, or a network article. This is not limited in this application.

According to a fifth aspect, a server is provided. The server includes: a memory, configured to store computer program instructions; a communication interface, configured to send and receive a signal; and a processor, configured to execute the instructions, so that an electronic device implements the method according to any one of the possible implementations of the first aspect.

According to a sixth aspect, an end user device is provided. The end user device includes: a display, configured to display an interface; a memory, configured to store computer program instructions; a communication interface, configured to send and receive a signal; and a processor, configured to execute the instructions, so that an electronic device implements the method according to any one of the possible implementations of the second aspect.

According to a seventh aspect, a computer-readable storage medium is provided. The computer-readable storage medium stores computer-readable instructions, and when the computer-readable instructions are executed by a processor, the method according to any one of the possible implementations of the first aspect is implemented.

According to an eighth aspect, an information obtaining system is provided. The information obtaining system includes the server according to any one of the possible implementations of the third aspect or the fifth aspect, and the end user device according to any one of the possible implementations of the fourth aspect or the sixth aspect.

According to a ninth aspect, a computer-readable storage medium is provided. The computer-readable storage medium stores computer-readable instructions, and when the computer-readable instructions are executed by a processor, the method according to any one of the possible implementations of the first aspect or the second aspect is implemented.

According to a tenth aspect, a chip system is provided. The chip system includes a processor and a memory, and the memory stores instructions. When the instructions are executed by the processor, the method according to any one of the possible implementations of the first aspect or the second aspect is implemented. The chip system may include a chip, or may include a chip and another discrete component.

According to an eleventh aspect, a computer program product is provided, including computer-readable instructions. When the computer-readable instructions are run on a computer, the method according to any one of the possible implementations of the first aspect or the second aspect is implemented.

### BRIEF DESCRIPTION OF DRAWINGS

FIG. 1 is a schematic diagram of implementing information browsing by using a topic created based on a single entity according to an embodiment of this application;
FIG. 2 is a diagram of a system architecture according to an embodiment of this application;
FIG. 3 is a schematic diagram of a structure of a server and an interaction relationship between the server and another apparatus according to an embodiment of this application;
FIG. 4 is a schematic diagram of a hardware structure of an end user device according to an embodiment of this application;
FIG. 5A and FIG. 5B are an interaction diagram of an information obtaining process according to an embodiment of this application;
FIG. 6 is a schematic diagram of a process in which a user accesses a news application according to an embodiment of this application;
FIG. 7 is a schematic diagram of a process in which a user accesses a hot spot recommendation application according to an embodiment of this application;
FIG. 8 is a schematic diagram of a process in which a user accesses a topic selection page according to an embodiment of this application;
FIG. 9 is a schematic diagram of another process in which a user accesses a topic selection page according to an embodiment of this application;
FIG. 10 is a schematic diagram of a process in which a user accesses a news topic according to an embodiment of this application;
FIG. 11 is a schematic diagram of another process in which a user accesses a news topic according to an embodiment of this application; and
FIG. 12 is a schematic diagram of a process in which a user accesses a specific news event according to an embodiment of this application.

### DESCRIPTION OF EMBODIMENTS

The following describes technical solutions in embodiments of this application with reference to accompanying drawings in embodiments of this application. In descriptions in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the description of embodiments of this application, "a plurality of" means "two or more".

In the following description, the terms "first" and "second" are merely intended for a purpose of description, and shall not be understood as indicating or implying relative importance or implying a quantity of indicated technical features. Therefore, a feature defined with "first" or "second" may explicitly or implicitly include one or more features. In the description of embodiments, unless otherwise specified, "a plurality of' means two or more.

It may be understood that, in a conventional information search method, a user needs to search for a plurality of related keywords one by one in an application/web page, or search for a plurality of related keywords one by one in different applications/web pages, to view information of a same subject or topic. This operation is cumbersome and time-consuming. In addition, because the information search is performed for a plurality of times one by one, a plurality of information search results cannot be centrally displayed to the user.

To improve convenience of obtaining information, in some embodiments of this application, a phrase or a sentence may be configured in advance to generate a topic, a subject, a theme, or the like. The topic is used as an example in the following embodiments. The topic may be selected by the user, to support the user in quickly and centrally obtaining all information corresponding to the topic through topic selection. Based on the method, the user does not need to search for a plurality of related keywords one by one, and therefore, this method is much more convenient than the conventional information search method.

However, in the foregoing method of configuring the phase or the sentence in advance to generate the topic for the user to select, the phrase or the sentence is configured manually, for example, configured by operation personnel of a news application/web page. Because a large amount of information of a same topic may have a plurality of sources, a large quantity of labor is required to configure the phrase or the sentence based on massive original information to train a generation model of the topic. This is a heavy workload and is quite time-consuming. In addition, if the generation model of the topic does not adapt to a specific phrase or sentence, an error occurs in topic generation. For example, phrases configured in advance based on news information "Company A trades Company B" include "Company A", "Company B", and "trade". Assuming that a generation model of a topic does not adapt to the foregoing phrases, a topic "Company A and Company B trade" may be generated.

To reduce workload of operation personnel and avoid an error in topic generation while improving convenience of information obtaining, an embodiment of this application provides an automatic topic creation method. A main process of the method includes: first, automatically extracting keywords from the massive original information, for example, obtaining massive original information from different channels based on a crawler information obtaining technology, and recognizing keywords in the information based on a trained model. For example, the keywords in the information may be entity words (such as a person name, a place name, an activity name, and an organization name) that appear most frequently and an associated word associated with the entity words. Then, a topic is created based on the extracted keywords. For example, information including a same keyword belongs to a same topic. Finally, the created topic is displayed to the user for selection by the user. After the user selects a specific topic, all content related to the topic may be centrally displayed to the user.

It may be understood that, in the foregoing automatic topic creation method, the user does not need to search for related keywords one by one, a related phrase or sentence does not need to be manually configured, and an error in topic generation may be avoided. However, the topic created based on the foregoing method is based on only one extracted keyword. Therefore, the topic covers an excessively wide range, and specific hot spot content cannot be located.

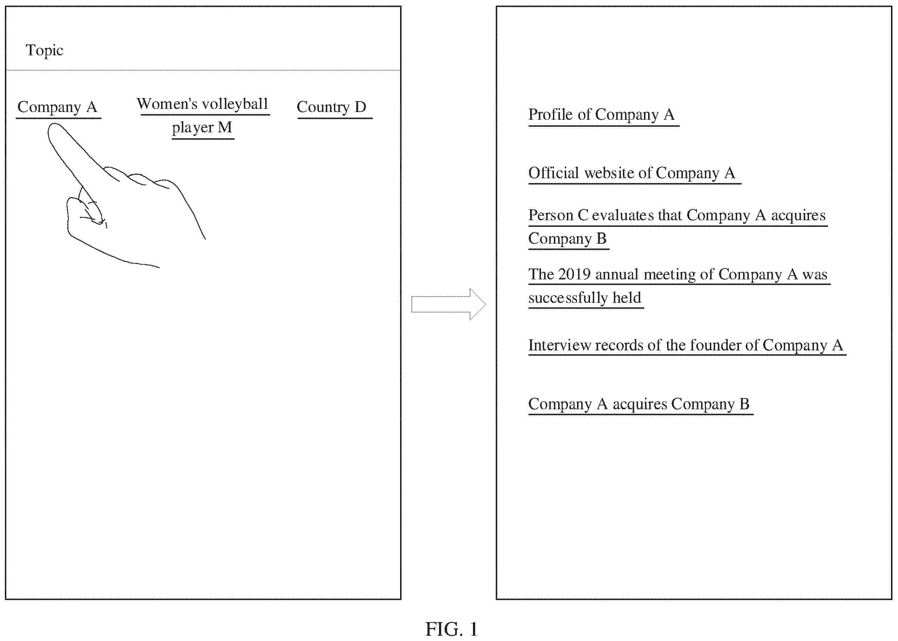

News information is used as an example. For example, as shown in FIG. 1, when receiving an operation of selecting, by a user, a topic "Company A" that is created in advance, an electronic device includes all news information related to the topic "Company A", including news events that just occurred and that have high time validity: "Company A acquires Company B" and "Person C evaluates that Company A acquires Company B", and further including news events that occurred a long time ago and that have low time validity or low importance: "The 2019 annual meeting of Company A was successfully held" and "Interview records of the founder of Company A", and another basic introduction, for example, "Profile of Company A" and "Official website of Company A".

As we know, when news information is obtained, the user usually pays less attention to a related news event that occurred a long time ago and that has low time validity and/or a news event that has low importance. Therefore, excessive redundant news information not only wastes background resources, but also occupies a browsing interface of the user, causing interference to information reading of the user.

To resolve this problem, an embodiment of this application provides an information obtaining method. In the method, a plurality of entity words and an associated word related to the entity words may be automatically extracted from massive original information, to create a plurality of topics in a manner of combining the plurality of entity words and display the topics to a user, so that the user can directly access a specific topic to centrally access specific content related to the topic.

In an example, a server may be responsible for a process of automatically extracting the entity words to create the plurality of topics. After the server creates the topics, the created plurality of topics may be displayed to the user by using an electronic device. In addition, the electronic device may further display, in response to an operation of selecting a specific topic by the user, specific content related to the topic to the user.

Optionally, the massive original information may be stored in a storage device in advance. In an example, the storage device may be located in the server. In another example, the storage device may be used as an independent database, and may support obtaining of original information from a plurality of channels and access of an authorized server to a database stored in the storage device.

It should be noted that the information in this embodiment of this application may be news information. However, the information obtaining method provided in this embodiment of this application may alternatively be used to obtain other types of information, such as a social media speech, a thesis, or a network article. The following embodiments of this application are described by using only the news information as an example.

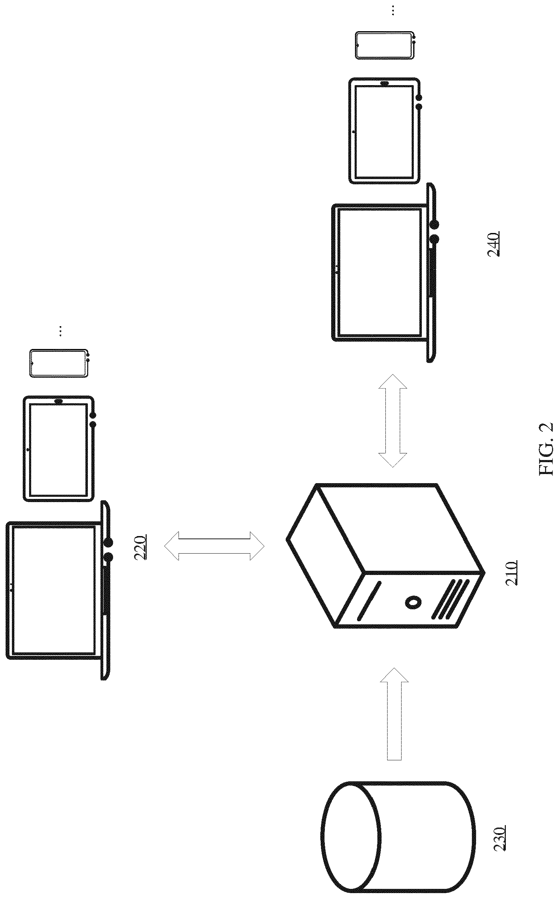

In an example, an information type is the news information, and the storage device is used as an independent database. FIG. 2 is a diagram of a system architecture according to an embodiment of this application. An information obtaining method provided in this embodiment of this application may be implemented based on a system structure including a server 210, an end user device 220, a storage device 230, and an end user device 240 shown in FIG. 2.

The storage device 230 shown in FIG. 2 is mainly configured to store original news information. For example, the storage device 230 may obtain original news information from a plurality of corporate partners (corporate partner, CP) (for example, other news application servers authorized to the storage device 230) authorized to the storage device 230. Alternatively, optionally, the storage device 230 may be a module configured to store original news information in a server of a news application. For example, the storage device 230 may be specifically a module configured to store original news information in a server of a plurality of news applications (for example, Jinri Toutiao^{®}, Sina News^{®}, Sohu News^{®}, and CCTV News^{®}).

The server 210 shown in FIG. 2 is mainly configured to automatically obtain original information from a plurality of channels and store the original information in the storage device 230, and automatically obtain original news information from the storage device 230, extract entity words and an associated word related to the entity words in the original news information based on a preset language algorithm/model, create a topic represented in a manner of combining a plurality of entity words based on the entity words and the associated word, and push the created topic to the end user device 240.

The end user device 240 shown in FIG. 2 is mainly configured to: display the topic created by the server 210 to a user, and when the user selects a specific topic, request, from the server 210, detailed information about a specific news event related to the topic, and display the detailed information to the user.

In some embodiments, when creating a topic, the server 210 may represent, based on a default setting, the topic in a manner of combining K (K is an integer, and K > 1) entity words. To be specific, a K value may be used to limit a name length of a topic. For example, K = 2, and the server 210 may use "Company A Company B" as a name of a news topic that is highly related to both "Company A" and "Company B".

In addition, in some embodiments, when creating a topic, the server 210 may represent, based on a customized setting of K by operation personnel or a corporate partner, the topic in a manner of combining a corresponding quantity of entity words.

The end user device 220 shown in FIG. 2 is mainly configured for the operation personnel to set the K value. For example, a page on which the K value is set is, for example, a web page. This is not limited in this embodiment of this application.

In an example, the server 210 shown in FIG. 2 may be a server of a news application, for example, a server of a plurality of news applications of Jinri Toutiao^{®}, Sina News^{®}, Sohu News^{®}, CCTV News^{®}, and the like.

In another example, the server 210 shown in FIG. 2 may be an application server or an equipment supplier server (referred to as a hot spot recommendation application below) that has an information hot spot recommendation function. The information hot spot recommendation function is a function of obtaining hot spot information from a plurality of public information channels or cooperative information channels (such as news, social media speeches, theses, or network articles) by using an interconnected communication network, creating a topic to classify the hot spot information into a category, and then recommending the topic to a user.

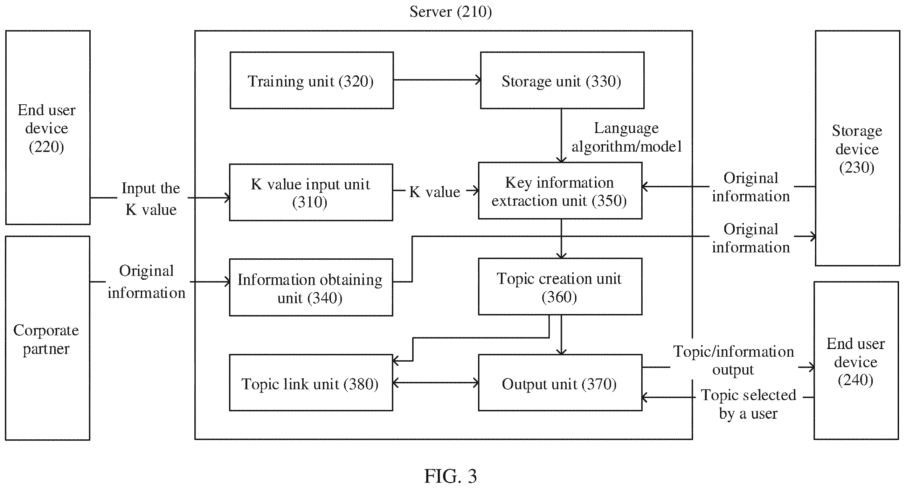

In an example, FIG. 3 is a block diagram of a structure of a server according to an embodiment of this application. As shown in FIG. 3, a server 210 includes a K value input unit 310, a training unit 320, a storage unit 330, an information obtaining unit 340, a key information extraction unit 350, a topic creation unit 360, an output unit 370, and a topic link unit 380.

The K value input unit 310 shown in FIG. 3 is configured for the operation personnel to set a K value. For example, as shown in FIG. 3, the operation personnel may input the K value to the K value input unit 310 by using an end user device 220, to set the K value.

The training unit 320 shown in FIG. 3 is configured to perform semantic vector algorithm/model training, entity word recognition algorithm/model training, associated word recognition algorithm/model training, and another language algorithm/model training.

For example, the semantic vector algorithm/model is, for example, a BERT (bidirectional encoder representations from transformers) model, a robustly optimized BERT approach (robustly optimized BERT approach, RoBERTa) model, an A lite BERT (A lite BERT, ALBERT) model, an enhanced representation through knowledge integration (enhanced representation through knowledge integration, ERNIE) model, or an ELECTRA (efficiently learning an encoder that classifies token replacements accurately) model. For specific descriptions of a semantic vector algorithm/model, refer to a conventional technology. This is not specifically limited in this embodiment of this application.

The semantic vector algorithm/model is used to perform text classification and text sequence tagging on information. The BERT model is used as an example. Label (label) classification may be performed on information through the text classification (for example, bertdense), for example, determining that the information belongs to a finance category, an entertainment category, a science and technology category, a sports category, a real estate category, a game category, a commercial category, a military category, an agriculture category, an education category, a culture category, a car category, or a livelihood category. The text sequence tagging (for example, bert-bilstm-crf) may be used to perform refined word segmentation on text in information, for example, Chinese word segmentation (Chinese word segment, CWS), part-of-speech tagging (part-of-speech tagging, POS), and named entity recognition (named entity recognition, NER). For specific descriptions of the text classification and the text sequence tagging performed by the semantic vector algorithm/model, refer to a conventional technology. This is not specifically limited in this embodiment of this application.

The entity word recognition algorithm/model is used to recognize a plurality of key entity words (referred to as "entity words") in information, such as a person name, a place name, an activity name, and an organization name (for example, a country name, a team name, a company name, and a brand name). An associated word recognition algorithm/model is used to recognize a verb, a conjunction, an adjective, an adverb, or another word, a phrase, or another associated word that is associated with the plurality of recognized entity words in the information, for example, "acquire", "evaluate", "XX plan", "defeat", and "win".

The storage unit 330 shown in FIG. 3 is configured to store a language algorithm/model obtained by the training unit 320 through training, for example, the semantic vector algorithm/model, the entity word recognition algorithm/model, and the associated word recognition algorithm/model. In an example, the storage unit 330 may be a Hadoop distributed file system (Hadoop distributed file system, HDFS). The HDFS may accept access and information reading of a module, for example, the key information extraction unit 350.

The information obtaining unit 340 shown in FIG. 3 is configured to obtain original information from a channel, for example, a corporate partner. The original information may be stored in a storage device 230. The original information includes information content and an information link. For example, the original information is news information, and the original information includes original news content and a news link. In an example, the information obtaining unit 340 may obtain massive original information of a plurality of channels based on a crawler information obtaining technology. For example, the information obtaining unit 340 may trigger, based on the crawler information obtaining technology, at a scheduled time, periodically, or in response to a preset event, obtaining of the massive original information from a plurality of corporate partners.

The key information extraction unit 350 shown in FIG. 3 is configured to: obtain original information from the storage device 230, and perform original information analysis based on the language algorithm/model (for example, the semantic vector algorithm/model, the entity word recognition algorithm/model, and the associated word recognition algorithm/model) stored in the storage unit 330, to extract a plurality of entity words and an associated word related to the plurality of entity words from the original information.

The topic creation unit 360 shown in FIG. 3 is configured to create one or more topics based on key information extracted by the key information extraction unit 350, for example, a title semantic vector, entity words whose quantity is consistent with the input K value, and an associated word related to the entity words. One topic includes K entity words, and the topic is associated with original information related to the K entity words. For example, it is assumed that K = 2, and a created topic is "Company A Company B".

For example, after a topic is created, a label may be put on original information related to the topic, and the label is, for example, a topic name or a topic identifier. Alternatively, the topic may be associated with the original information related to the topic in another association manner. This is not limited in this embodiment of this application.

In an example, after a topic is created, in the topic link unit 380, the topic creation unit 360 may aggregate information related to the topic based on entity words and an associated word that correspond to the topic, for example, aggregate information content and an information link that are related to the topic.

The output unit 370 shown in FIG. 3 is configured to output a topic created by the topic creation unit 360, for example, output the topic to an end user device 240. An application having an information display function is installed in the end user device 240, or the end user device is integrated with an information display native function, for example, a news application or an information hot spot recommendation application/native function. The end user device 240 may display one or more themes to a user by using the foregoing application/native function.

In some embodiments, when the end user device 240 receives an operation of selecting a specific topic by the user, the end user device 240 sends the topic selected by the user to the output unit 370, and requests, from the output unit 370, information overview content and an information link that correspond to the topic. The information overview content includes an information overview of the original information, for example, an information title, an information title and a content overview, or an information title and a part of information text content. Specific content included in the information overview content is not limited in this application.

In some embodiments, the output unit 370 is further configured to: obtain, based on a request of the end user device 240, the information overview content corresponding to the topic from the topic link unit 380, and send the information overview content to the end user device 240. The information overview content corresponding to the topic is used for the end user device 240 to display, in response to an operation of selecting the topic by the user, an information aggregation interface related to the topic to the user, so that the user can browse the information overview. The information link is used for the end user device 240 to link and enter a corresponding original information content page in response to an operation of selecting a specific piece of information overview content by the user.

The end user devices (220, 240) in this embodiment of this application may include but are not limited to mobile phones, netbooks, tablet computers, in-vehicle devices, wearable devices (such as a smartwatch or a smart band), PCs (including a desktop computer or a notebook computer), palmtop computers, smart screen devices, augmented reality (augmented reality, AR)/virtual reality (virtual reality, VR) devices, mixed reality (mixed reality, MR) devices, and the like. A specific function and structure of the end user device are not limited in this application.

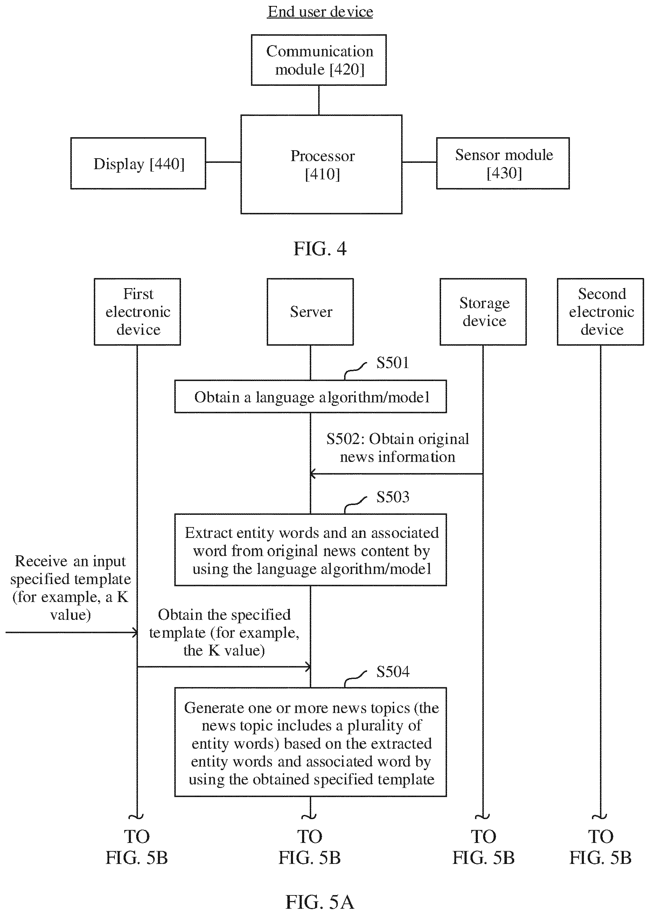

In an example, FIG. 4 is a schematic diagram of a hardware structure of an end user device according to an embodiment of this application.

As shown in FIG. 4, end user devices (220, 240) may include a processor 410, a communication module 420, a sensor module 430, a display 440, and the like.

The processor 410 may include one or more processing units, for example, the processor 410 may include an application processor (application processor, AP), a modem processor, a graphics processing unit (graphics processing unit, GPU), an image signal processor (image signal processor, ISP), an audio processor/digital processor (the audio processor), a controller, a memory, a video codec, an audio codec, a digital signal processor (digital signal processor, DSP), a baseband processor, a neural-network output processing unit (neural-network processing unit, NPU), and/or the like. Different processing units may be independent components, or may be integrated into one or more processors.

In this embodiment of this application, the processor 410 may obtain, by using an I2C bus interface, a tap operation, a touch and hold operation, a preset gesture operation, and another touch operation of selecting a topic that are detected by the sensor module 430 (for example, a touch sensor) and that are of the user, to determine a specific intention corresponding to the touch operation, and respond to the touch operation, for example, jumping to an information aggregation interface related to the topic.

The touch sensor is also referred to as a "touch panel". The touch sensor may be disposed in the display 440, so that the touch sensor and the display 440 constitute a touchscreen, also referred to as a "touch control screen". The touch sensor is configured to detect a touch operation performed on or near the touch sensor. The touch sensor may transfer a detected touch operation (including information such as a touch location, touch strength, a contact area, and touch duration) to the processor, to determine a touch event type. A visual output related to the touch operation may be provided on the display 440. In some other embodiments, the touch sensor may alternatively be disposed on surfaces of the end user devices (220, 240), and is at a location different from a location of the display 440.

In this embodiment of this application, the touch operation detected by the touch sensor may be an operation performed by the user on or near the touchscreen by using a finger, or may be an operation performed by the user on or near the touchscreen by using a stylus, a touch stylus, a touch ball, or another touch auxiliary tool. This is not limited in this application.

A communication function of the end user devices (220, 240) may be implemented by using the communication module 420.

In some embodiments of this application, the end user device 220 may send, to a server by using the communication module 420, a K value that is input by operation personnel.

In some other embodiments of this application, the end user device 240 may, for example, receive one or more topics from the server by using the communication module 420, send a topic selected by the user to the server, and obtain an information link related to the topic from the server.

The end user devices (220, 240) implement a display function by using the graphics processing unit (graphics processing unit, GPU), the display 440, the application processor, and the like. The GPU is a microprocessor for image processing, and is connected to the display 440 and the application processor. The GPU is configured to perform data and geometric computation for graphic rendering. The processor 410 may include one or more GPUs that execute program instructions to generate or change display information.

In this embodiment of this application, the GPU may be configured to perform interface rendering. The display 440 may be configured to display an interface. For example, the interface may include but is not limited to a K value setting interface, an information display application/native function interface (for example, a news application interface, and an information hot spot recommendation application/native function interface), and the like.

It may be understood that the schematic structure in this embodiment of this application does not constitute a specific limitation on the end user devices (220, 240). In some other embodiments of this application, the end user devices (220, 240) may include more or fewer components than those shown in the figure, or have some components combined, or have some components split, or have a different component arrangement. The components shown in the figure may be implemented in hardware, software, or a combination of software and hardware.

For example, if the end user devices (220, 240) are PCs, the end user devices (220, 240) may further include a mouse and a keyboard. The end user device 220 may receive the K value that is input by the operation personnel by using the keyboard, and send, to the server (the server 210 shown in FIG. 2 or FIG. 3), the K value that is input by the operation personnel, to set the K value. Alternatively, the end user device 240 may accept a topic selected by the user through a mouse clicking operation, and request an information link related to the topic from the server (the server 210 shown in FIG. 2 or FIG. 3); and the end user device 240 may accept an information link that is related to a specific topic and that is selected by the user through a mouse clicking operation, and jump to an information content page (for example, a news content page).

The following specifically describes, with reference to the accompanying drawings, the information obtaining method provided in this embodiment of this application by using an example in which an obtained information type is news information.

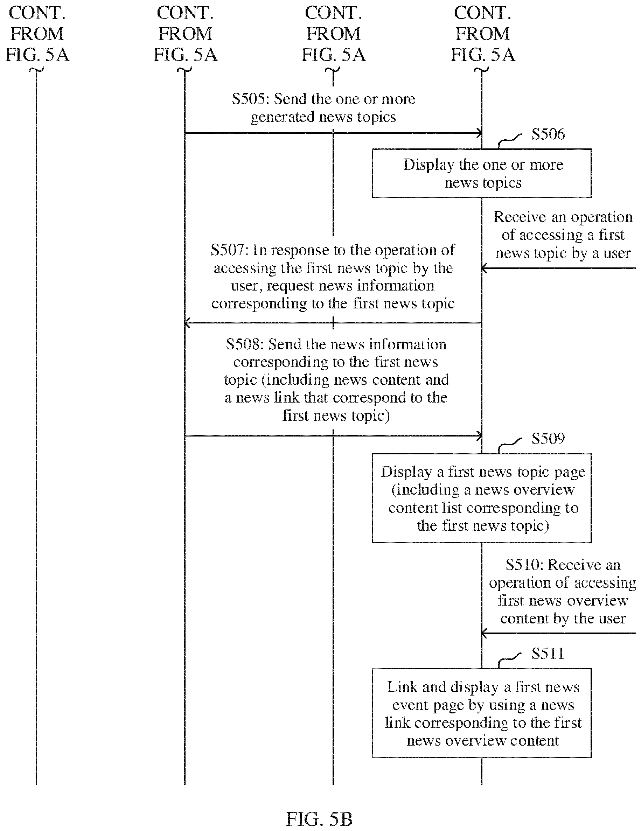

In this embodiment of this application, an information obtaining process may include: a topic generation stage (denoted as a stage 1), a topic push stage (denoted as a stage 2), and a stage of obtaining information through topic selection (denoted as a stage 3). FIG. 5A and FIG. 5B are an interaction diagram of an information obtaining process according to an embodiment of this application. The interaction diagram of the information obtaining process shown in FIG. 5A and FIG. 5B is used as an example. The stage 1 may include S501 to S504 shown in FIG. 5A and FIG. 5B, the stage 2 may include S505 to S506 shown in FIG. 5A and FIG. 5B, and the stage 3 may include S507 to S511 shown in FIG. 5A and FIG. 5B.

As shown in FIG. 5A and FIG. 5B, an information obtaining method provided in an embodiment of this application includes S501 to S511.

S501: A server obtains a language algorithm/model.

The language algorithm/model is used to analyze original news information and extract key information (such as a keyword). For example, the language algorithm/model may be a semantic vector algorithm/model, an entity word recognition algorithm/model, an associated word recognition algorithm/model, and the like. The semantic vector algorithm/model is used to perform text classification and text sequence tagging on the original news information, the entity word recognition algorithm/model is used to recognize entity words (such as a person name, a place name, an activity name, and an organization name) in the original news information, and the associated word recognition algorithm/model is used to recognize an associated word associated with the recognized entity words in the original news information.

In an example, the server may perform language algorithm/model training based on training data (for example, text content). The server with the structure shown in FIG. 3 is used as an example. The server may perform semantic vector algorithm/model training, entity word recognition algorithm/model training, associated word recognition algorithm/model training, and another language algorithm/model training based on the training data (for example, the text content) by using the training unit 320 shown in FIG. 3.

In a possible implementation, the server may train and update the language algorithm/model training at a scheduled time, or the server may periodically train and update the language algorithm/model training. This is not specifically limited in this embodiment of this application.

For example, the server is an application server or an equipment supplier server. The application server or the equipment supplier server has an information search function, an information hot spot recommendation function, and other functions. This is not specifically limited in this embodiment of this application.

S502: The server obtains the original news information from a storage device.

The original news information in the storage device is from one or more channels. For example, the original news information in the storage device is from a plurality of news applications, for example, Jinri Toutiao^{®}, Sina News^{®}, Sohu News^{®}, and CCTV News^{®}.

In a possible implementation, the server may obtain the original news information from the one or more channels based on a crawler information obtaining technology, and store the original news information in the storage device. For example, obtaining of the original news information by the server based on the crawler information obtaining technology may be triggered at a scheduled time, periodically, or in response to a preset event. This is not limited in this embodiment of this application.

The server with the structure shown in FIG. 3 is used as an example. The server may obtain the original news information from the one or more channels by using the information obtaining unit 340 shown in FIG. 3, and store the original news information in the storage device 230.

The original news information includes original news content and a corresponding news link.

For example, the original news information obtained by the server from the storage device includes: news content 1 and a news link 1 that are from a news application 1 and that are related to "Company A acquires Company B", news content 2 and a news link 2 that are from a news application 2 and that are related to "Company A acquires Company B", news content 3 and a news link 3 that are from a news application 3 and that are related to "Person C evaluates that Company A acquires Company B", news content 4 and a news link 4 that are from a news application 4 and that are related to "Person C evaluates that Company A acquires Company B, and XX plan is completed", and news content 5 and news link 5 that are from a news application 5 and that are related to "The 2019 annual meeting of Company A was successfully held".

Optionally, for example, the original news information obtained by the server from the storage device further includes: news content 6 and a news link 6 that are from the news application 1 and that are related to "Team A defeats Team B", news content 7 and a news link 7 that are from the news application 2 and that are related to "Team B is defeated by Team A", news content 8 and a news link 8 that are from the news application 3 and that are related to "Person D commentates the battle between Team B and Team A", news content 9 and a news link 9 that are from the news application 4 and that are related to " Profile of Team B", and news content 10 and a news link 10 that are from the news application 5 and that are related to "Profile of Team A".

In some embodiments, the storage device is the storage device 230 shown in FIG. 2. For example, the storage device may be a Hadoop distributed file system.

It should be noted that FIG. 5A and FIG. 5B are merely an example of a manner in which the server obtains the original news information. This is not specifically limited in this embodiment of this application. For example, in some embodiments, the storage device may alternatively be a module that is in the server and that is configured to store the original news information. Alternatively, optionally, the server may directly obtain the original news information from a plurality of corporate partners (for example, other news application servers authorized to the server) authorized to the server.

S503: The server extracts entity words and an associated word from the original news content by using the language algorithm/model.

In an example, the server may analyze the original news content and extract the entity words and the associated word by using the language algorithm/model. The extracted associated word is associated with the extracted entity words. For example, the entity words are a person name, a place name, an activity name, an organization name, and the like; and the associated word is a verb, a conjunction, an adjective, an adverb, another word, a phrase, or the like that is associated with the entity words.

In an example, the server analyzes the original news content by using the language algorithm/model, for example, may perform text classification and text sequence tagging.

For example, the language algorithm/model used by the server is, for example, a BERT model, a RoBERTa model, an ALBERT model, an ERNIE model, or an ELECTRA model. This is not specifically limited in this embodiment of this application.

In an example, the entity words extracted by the server from the original news content by using the language algorithm/model may meet one or more of the following conditions: the entity words are located at a key location (for example, a news title or a preset paragraph) in the original news content, occurrence frequencies of the entity words in the original news content meets a preset condition (for example, a ranking is higher than a preset ranking, and a frequency is higher than a preset value), and the like.

In a possible implementation, the server may extract a plurality of keywords from the original news content by using the language algorithm/model, and obtain weights corresponding to the plurality of keywords. The server may extract a plurality of entity words from the plurality of keywords based on the weights. For example, the plurality of entity words may be a plurality of keywords whose weights are in the front in the plurality of keywords. The weights corresponding to the plurality of keywords are related to one or more of the following: locations of the plurality of keywords in the original news content, occurrence frequencies of the plurality of keywords in the original news content, and the like.

Example 1 is used as an example below. Assuming that the original news information obtained by the server from the storage device includes news content 1 to news content 5, the entity words extracted by the server may include a plurality of entity words and a plurality of associated words in Example 1.

### Example 1:

News content: {news content 1: news content related to "Company A acquires Company B"; news content 2: news content related to "Company A acquires Company B"; news content 3: news content related to "Person C evaluates that Company A acquires Company B"; news content 4: news content related to "Person C evaluates that Company A acquires Company B and XX plan is completed"; and news content 5: news content related to "The 2019 annual meeting of Company A was successfully held"}.

Entity words: {"Company A"; "Company B"; "Person C"; and "annual meeting"}.

Associated words: {"acquire"; "evaluate"; "XX plan"; and "successfully held"}.

Example 2 is used as an example below. Assuming that the original news information obtained by the server from the storage device further includes news content 6 to news content 10, the entity words extracted by the server may further include a plurality of entity words and a plurality of associated words in Example 2.

### Example 2:

News content: {news content 6: news content related to "Team A defeats Team B"; news content 7: news content related to "Team B is defeated by Team A"; news content 8: news content related to "Person D commentates the battle between Team B and Team A"; news content 9: news content related to "Profile of Team B"; and news content 10: news content related to "Profile of Team A"}.

Entity words: { "TeamA"; "TeamB"; and "Person D"}.

Associated words: {"defeat"; "is defeated"; "commentate"; and "profile"}.

The server with the structure shown in FIG. 3 is used as an example. The server may extract the entity words and the associated word from the original news content by using the key information extraction unit 350 shown in FIG. 3.

S504: The server generates one or more news topics based on the extracted entity words and associated word by using a specified template obtained from a first electronic device, where the news topic includes a plurality of entity words.

The specified template is, for example, a combination of K entity words.

In an example, as shown in FIG. 5A and FIG. 5B, the specified template (for example, a K value) may be input by operation personnel to the server by using the first electronic device. For example, the first electronic device is the end user device 220 shown in FIG. 2.

In some examples, the server may use a same K value for news topic generation. In other words, the news topics generated by the server include a same quantity of entity words.

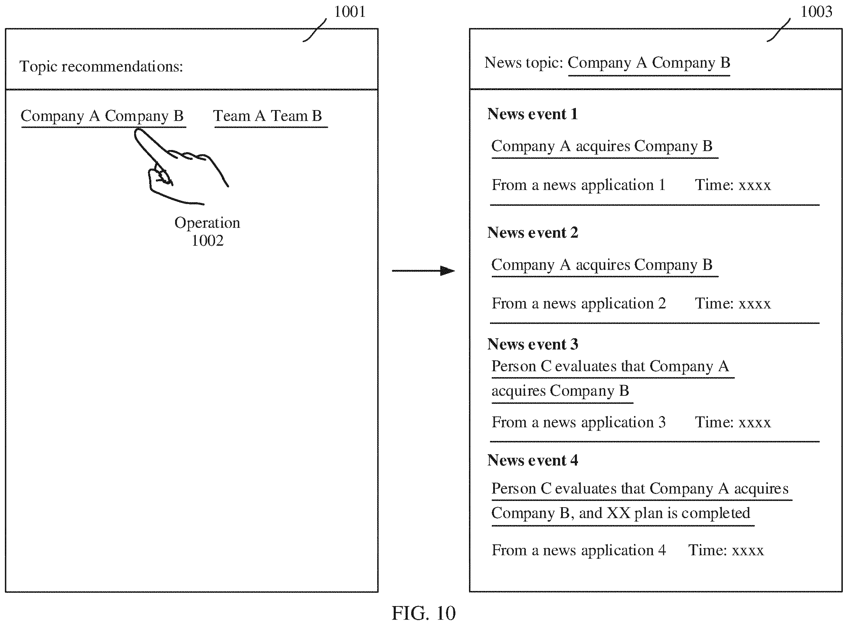

For example, K = 2, and as shown in an interface 1001 in FIG. 10, the server may generate a news topic "Company A Company B" based on the entity words and the associated words extracted in Example 1; and the server may generate a news topic "Team A Team B" based on the entity words and the associated words extracted in Example 2.

In some other examples, the server may use different K values to generate different news topics. In other words, the plurality of news topics generated by the server may include different quantities of entity words. For example, news topics classified by different labels may include different quantities of entity words. For example, a K value corresponding to a commercial news topic is 2, and a K value corresponding to a sports news topic is 3.

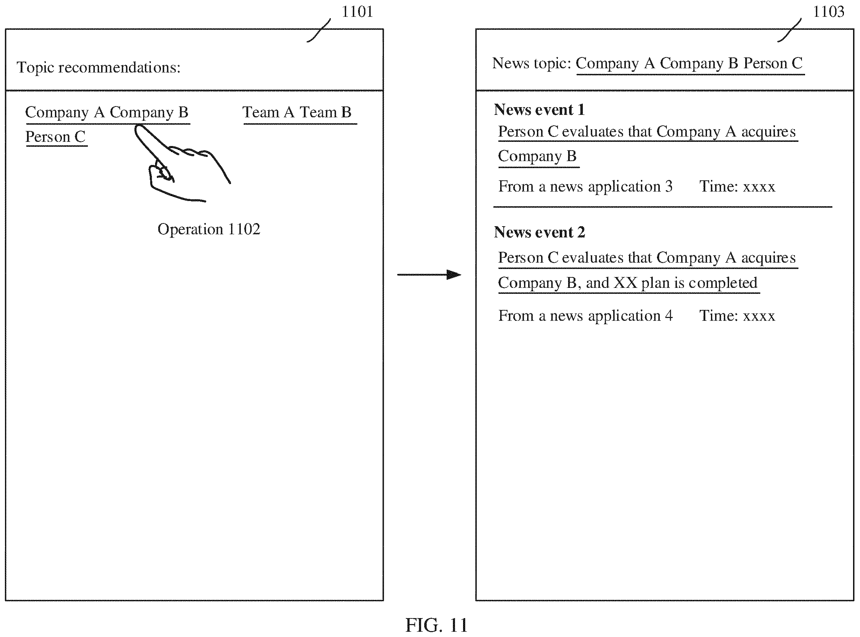

For example, K corresponding to the commercial news topic is 3, and as shown in an interface 1101 in FIG. 11, the server may generate a news topic "Company A Company B Person C" based on the entity words and the associated words extracted in Example 1. K corresponding to the sports news topic is 2, and the server may generate a news topic "Team A Team B" based on the entity words and the associated words extracted in Example 2.

Optionally, in some embodiments, there may be a plurality of specified templates that are obtained from the first electronic device and that are used by the server. For example, the operation personnel may input a plurality of different K values to the server by using the first electronic device, for example, K1 value and a K2 value, where K1 ≠ K2. In this case, during news topic creation, the server may create a plurality of news topics including different quantities of entity words for same original news.

For example, in an example in which the commercial news topic corresponds to K1 and K2, K1 = 2, and K2 = 3, the server may generate news topics "Company A Company B" and "Company A Company B Person C" based on the entity words and the associated words extracted in Example 1.

Optionally, the server may trigger news topic generation at a scheduled time, periodically, or in response to a preset event.

For example, the method provided in this embodiment of this application may further support the operation personnel in modifying the specified template (for example, the K value). After the operation personnel modify the specified template (for example, the K value), the server may regenerate a news topic based on a latest specified template (for example, the K value) in response to a modification event (that is, a preset event) of the specified template (for example, the K value). For example, assuming that the server generates a news topic "Company A Company B" based on the K value (for example, 2) at a first moment, and the operation personnel modifies the K value to 3 at a second moment (the second moment is later than the first moment), the server regenerates a news topic "Company A Company B Person C" based on a latest K value.

The server with the structure shown in FIG. 3 is used as an example. The server may generate one or more news topics based on the extracted entity words and associated words by using the topic creation unit 360 shown in FIG. 3 by using the specified template obtained from the first electronic device.

S505: The server sends the one or more generated news topics to a second electronic device.

For example, the second electronic device may be the end user device 240 shown in FIG. 2.

In a possible implementation, the server may automatically send the one or more generated news topics to the second electronic device after the news topics are created.

In another possible implementation, the server may send the one or more generated news topics to the second electronic device in response to a request of the second electronic device.

The server shown in FIG. 3 is used as an example. The server may send the one or more generated news topics to the second electronic device by using the output unit 370 shown in FIG. 3.

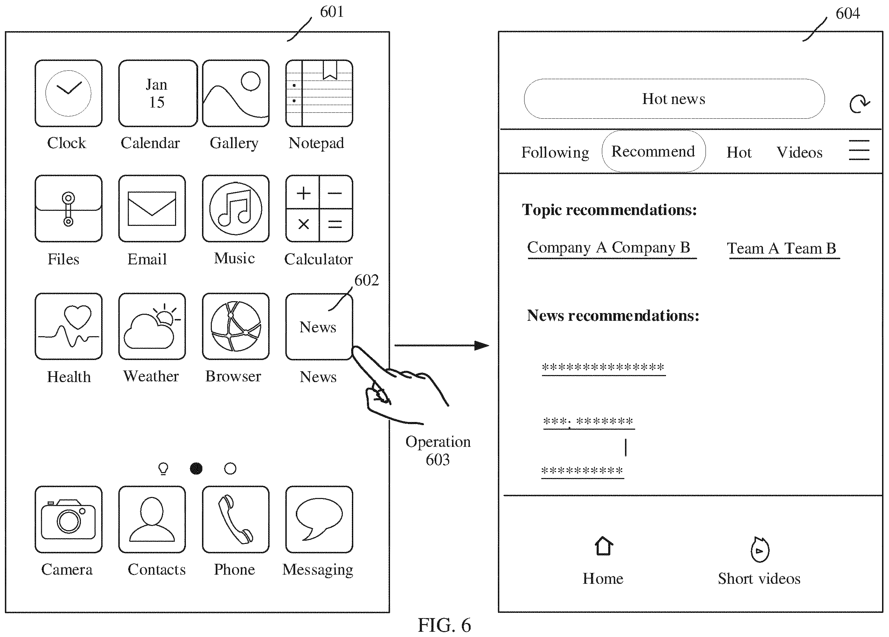

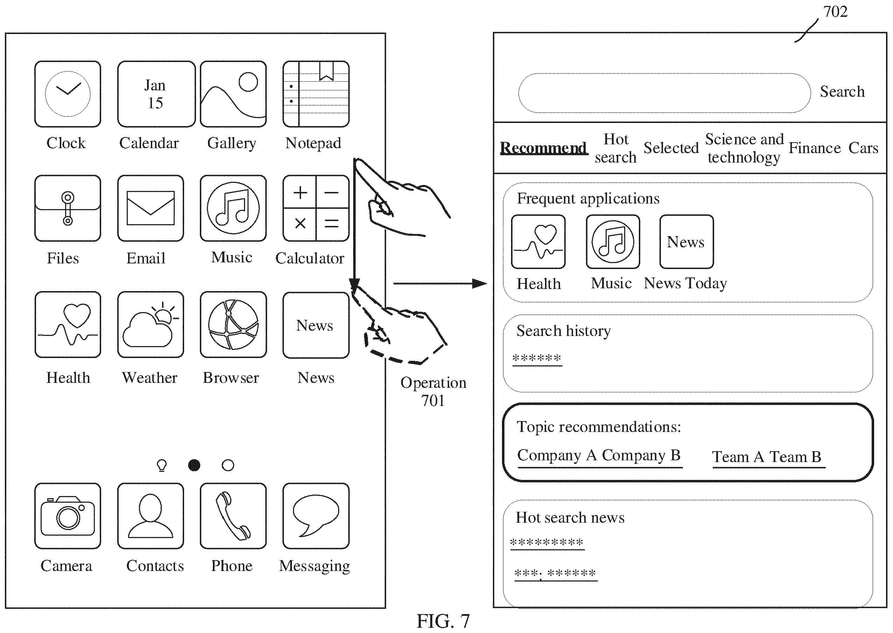

For example, the second electronic device may request a news topic from the server in response to an operation of starting a news application or a hot spot recommendation application by the user. For example, as shown in FIG. 6, the operation of starting the news application by the user is, for example, an operation 603 of tapping an application icon 602 of a news application on a desktop 601 of an electronic device by the user. For another example, as shown in FIG. 7, the operation of starting the hot spot recommendation application by the user is, for example, an operation 701 of accessing a hot spot recommendation application interface of an electronic device by the user.

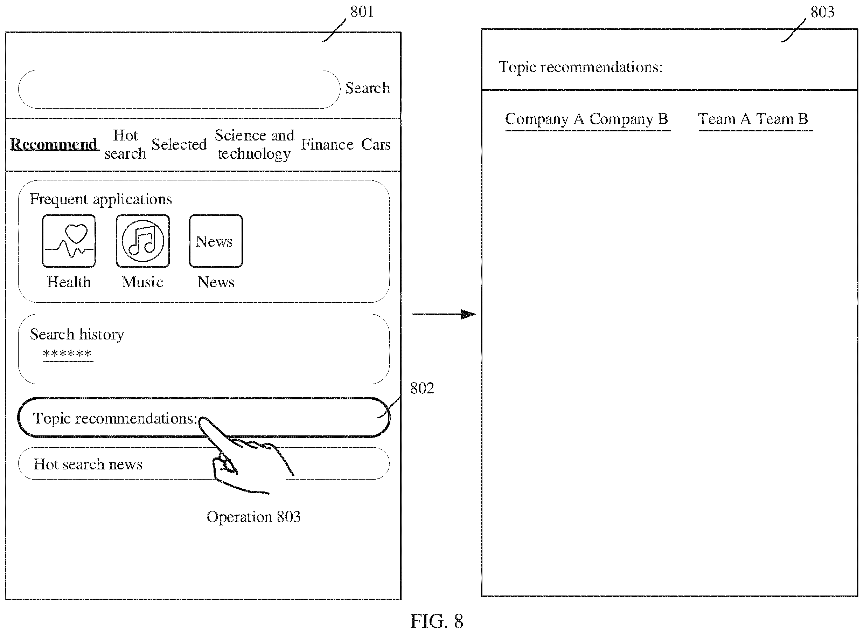

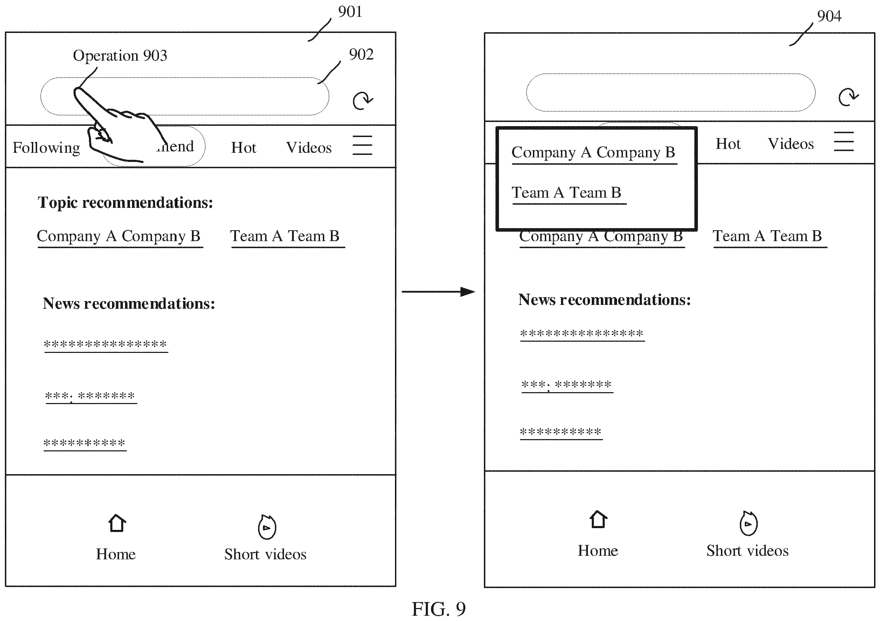

Alternatively, for example, the second electronic device may request a news topic from the server in response to an operation of accessing a topic selection page by the user. For example, as shown in FIG. 8, the operation of accessing the topic selection page by the user is, for example, an operation 803 of tapping topic entry control 802 in a hot spot recommendation application interface 801 by the user. For another example, as shown in FIG. 9, the operation of accessing the topic selection page by the user is, for example, an operation 903 of tapping a topic search bar 902 on a news application interface 901 by the user.

It should be noted that the operations of triggering the second electronic device to request the news topic from the server shown in FIG. 6 to FIG. 9 in this application are merely used as examples. This is not specifically limited in this embodiment of this application. For example, the operation of triggering the second electronic device to request a news topic from the server may alternatively be an operation of accessing, by the user, an application interface on which the topic selection page is located.

S506: The second electronic device displays the one or more news topics.

An interface used to display the news topic obtained from the server is not limited in this embodiment of this application.

For example, a news application or a hot spot recommendation application may be installed in the second electronic device, and the second electronic device may display, on a news application interface or a hot spot recommendation application interface, the one or more news topics obtained from the server.

In an example, the second electronic device may display, on a news application home page 604 shown in FIG. 6, the one or more news topics obtained from the server.

In another example, the second electronic device may display, on a hot spot recommendation application interface 702 shown in FIG. 7, the one or more news topics obtained from the server.

In another example, the second electronic device may display, on a topic list page 804 shown in FIG. 8, the one or more news topics obtained from the server.

In another example, the second electronic device may display, on a topic search page 904 shown in FIG. 9, the one or more news topics obtained from the server.

S507: The second electronic device requests, in response to an operation of accessing a first news topic by the user, news information corresponding to the first news topic from the server.

For example, the operation of accessing the first news topic by the user is, for example, an operation of tapping the first news topic (for example, a news topic "Company A Company B") in a topic recommendation section on the news application home page 604 shown in FIG. 6 by the user, an operation of tapping the first news topic (for example, a news topic "Company A Company B") in a topic recommendation section on the hot spot recommendation application interface 702 shown in FIG. 7 by the user, an operation of tapping the first news topic (for example, a news topic "Company A Company B") on the topic list page 804 shown in FIG. 8 by the user, or an operation of tapping the first news topic (for example, a news topic "Company A Company B") on the topic search page 904 shown in FIG. 9 by the user.

Alternatively, the operation of accessing the first news topic may be a touch and hold operation and another operation. This is not specifically limited in this embodiment of this application.

S508: The server sends the news information corresponding to the first news topic to the second electronic device, where the news information corresponding to the first news topic includes news overview content and a news link that correspond to the first news topic.

The news overview content corresponding to the first news topic is used for the second electronic device to display a subsequent news overview content list based on the news overview content. The news link corresponding to the first news topic is used for the user to directly link and enter an original news event page by using the news link when browsing a specific news event page.

In an example in which the first news topic is "Company A Company B", the news information corresponding to the first news topic includes: news content 1 and a news link 1 that are related to "Company A acquires Company B", news content 2 and a news link 2 that are related to "Company A acquires Company B", news content 3 and a news link 3 that are related to "Person C evaluates that Company A acquires Company B", and news content 4 and a news link 4 that are related to "Person C evaluates that Company A acquires Company B, and XX plan is completed".

Alternatively, in an example in which the first news topic is "Team A Team B", the news information corresponding to the first news topic includes: news content 6 and a news link 6 that are related to "Team A defeats Team B", news content 7 and a news link 7 that are related to "Team B is defeated by Team A", and news content 8 and a news link 8 that are related to "Person D commentates the battle between Team B and Team A".

The server with the structure shown in FIG. 3 is used as an example. The server may send, to the second electronic device by using the output unit 370 shown in FIG. 3, the news information that corresponds to the first news topic and that is temporarily stored in the topic link unit 380.

It should be noted that, an example in which the server sends the news overview content corresponding to the first news topic to the second electronic device, and the second electronic device displays the subsequent news overview content list based on the news overview content is merely used in this embodiment of this application. In another possible implementation, alternatively, the server may generate a news overview content list based on the news content corresponding to the first news topic, and send the news overview content list to the second electronic device, and the second electronic device directly displays the news overview content list.

S509: The second electronic device displays a first news topic page, where the first news topic page includes a news overview content list corresponding to the first news topic.

The first news topic page is an information aggregation interface related to the first news topic.

In an example, the news overview content list includes information overviews of a plurality of news events corresponding to the first news topic, for example, a news title, a news title and a content overview, or a news title and a part of news text content. Specific content included in the information overviews of the news events is not limited in this application.

For example, the operation of accessing the first news topic by the user is an operation 1002 of tapping a news topic "Company A Company B" on a topic list page 1001 shown in FIG. 10 by the user. In response to the operation 1002, the second electronic device displays a news topic page 1003 shown in FIG. 10. As shown in FIG. 10, the news topic page 1003 includes information overviews of a news event 1, a news event 2, a news event 3, and a news event 4 that correspond to the news topic "Company A Company B".

Optionally, as shown in FIG. 10, the news overview content list further includes sources of the plurality of news events corresponding to the first news topic.

Optionally, as shown in FIG. 10, the news overview content list further includes time (publication time) of the plurality of news events corresponding to the first news topic.

It should be noted that FIG. 10 is merely an example of a news topic page, and a layout of elements on the news topic page is not specifically limited in this embodiment of this application.

In addition, in FIG. 10, only an example in which a news topic includes two entity words (that is, K = 2) is used. A specific quantity of entity words forming the news topic is not specifically limited in this application. For example, as shown in FIG. 11, in response to an operation 1102 of tapping a news topic "Company A Company B Person C", on a topic list page 1101 by the user, the second electronic device displays a news topic page 1103 shown in FIG. 11. As shown in FIG. 11, the news topic page 1103 includes information overviews of a news event 1 and a news event 2 that correspond to the news topic "Company A Company B Person C".

S510: The second electronic device receives an operation of accessing first news overview content by the user.

For example, the operation of accessing the first news overview content by the user is, for example, an operation of tapping news overview content of a news event 1, a news event 2, a news event 3, or a news event 4 on the news topic page shown in FIG. 10 by the user, or an operation of tapping news overview content of a news event 1 or a news event 2 on the news topic page shown in FIG. 11 by the user.

Alternatively, the operation of accessing the first news overview content by the user may be a touch and hold operation and another operation. This is not specifically limited in this embodiment of this application.

S511: The second electronic device links and displays a first news event page by using a news link corresponding to the first news overview content.

The first news event page is an original news content page.

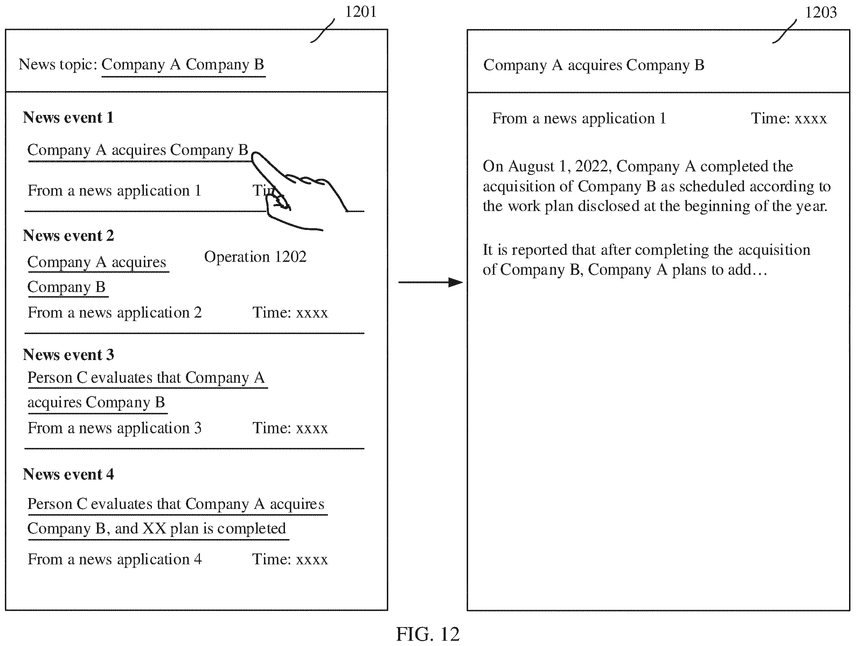

In an example, FIG. 12 is a schematic diagram of a process in which the second electronic device displays a specific news event page according to an embodiment of this application. As shown in FIG. 12, in response to an operation 1202 of tapping news overview content of a news event 1 on a news topic page 1201 shown in FIG. 12 by the user, the second electronic device displays an original news content page 1203 of the news event 1.

It should be noted that, in the foregoing embodiment of this application, the second electronic device requests, in response to the operation of accessing the first news topic by the user, the news information corresponding to the first news topic from the server. Correspondingly, an implementation in which the server sends, to the second electronic device based on the request of the second electronic device, the news overview content and the news link that correspond to the first news topic is merely used as an example. In some other embodiments, the second electronic device may alternatively request, in response to the operation of accessing the first news topic by the user, only the news overview content corresponding to the first news topic from the server, and display, based on the news overview content, the news overview content list corresponding to the first news topic. In addition, when the operation of accessing the first news overview content by the user on the news overview content list is received, the second electronic device requests the news link corresponding to the first news overview content from the server, and enters the first news event page based on the news link corresponding to the first news overview content, to display the first news event page.

It may be understood that, based on the information obtaining method provided in this embodiment of this application, entity words may be automatically extracted from massive original information, a topic formed by combining a plurality of entity words may be automatically created, and information related to the topic may be aggregated based on entity words and an associated word corresponding to the topic. Therefore, when a user selects a specific topic, an information aggregation interface related to the topic is displayed to the user, to facilitate browsing of the user on an information overview. Further, when the user selects specific information, an original information content page of the information is displayed to the user.

It may be understood that, in the foregoing automatic topic creation method, the user does not need to search for related keywords one by one, a related phrase or sentence does not need to be manually configured, and an error in topic generation may be avoided.

In addition, in the information obtaining method provided in this embodiment of this application, topic creation may be performed based on any type of entity word, for example, topic creation may not be performed only by using time, a place, a person, and a trigger word (including a verb and an adjective) as in a conventional technology. Therefore, massive original information may be traversed to avoid information leaving caused by the information that does not include specified content such as time, a location, a person, or a trigger word, for example, to avoid a loss of hot spot information.

In addition, a topic created based on the information obtaining method provided in this embodiment of this application includes a plurality of (for example, K) entity words. Therefore, specific hot spot topic content may be located, to avoid a problem that the topic covers an excessively wide range. In addition, a K value in the method may be customized based on an actual requirement. Therefore, representativeness of the topic and a capability of aggregating information of the topic may be improved by adjusting the K value.

It should be understood that the solutions in embodiments of this application may be properly combined for use, and explanations or descriptions of terms in embodiments may be cross-referenced or explained in embodiments. This is not limited.

It should be further understood that sequence numbers of the foregoing processes do not mean execution sequences in embodiments of this application. The execution sequences of the processes should be determined based on functions and internal logic of the processes, and should not be construed as any limitation on the implementation processes of embodiments of this application.

It may be understood that, to implement functions in any one of the foregoing embodiments, a server and an end user device include a corresponding hardware structure and/or software module for performing each function. A person skilled in the art should be easily aware that, in combination with the examples described in embodiments disclosed in this specification, units, algorithms, and steps may be implemented by hardware, or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the server and the end user device may be divided into functional modules. For example, each functional module corresponding to each function may be obtained through division, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

It should be further understood that each module in the server and the end user device may be implemented in a form of software and/or hardware. This is not specifically limited herein. In other words, the electronic device is presented in a form of a functional module. The "module" herein may be an application-specific integrated circuit ASIC, a circuit, a processor that executes one or more software or firmware programs and a memory, an integrated logic circuit, and/or another component that can provide the foregoing functions.

In an optional manner, when software is used for implementing data transmission, the data transmission may be completely or partially implemented in a form of a computer program product. The computer program product includes one or more computer instructions. When the computer program instructions are loaded and executed on a computer, the procedures or functions according to embodiments of this application are completely or partially implemented. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired manner (for example, a coaxial cable, an optical fiber, or a digital subscriber line (digital subscriber line, DSL)) or a wireless manner (for example, infrared, radio, and microwave, or the like). The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disk (digital video disk, DVD)), a semiconductor medium (for example, a solid-state drive solid state disk (SSD)), or the like.

Method or algorithm steps described in combination with embodiments of this application may be implemented by hardware, or may be implemented by a processor by executing software instructions. The software instructions may include a corresponding software module. The software module may be stored in a RAM memory, a flash memory, a ROM memory, an EPROM memory, an EEPROM memory, a register, a hard disk, a removable hard disk, a CD-ROM memory, or a storage medium in any other form well-known in the art. For example, the storage medium is coupled to the processor, so that the processor can read information from the storage medium and write information to the storage medium. Certainly, the storage medium may alternatively be a component of the processor. The processor and the storage medium may be disposed in an ASIC. In addition, the ASIC may be located in an electronic device. Certainly, the processor and the storage medium may exist in the server or the end user device as discrete components.

Based on the descriptions of the implementations, a person skilled in the art may clearly understand that for the purpose of convenient and brief descriptions, division into the foregoing functional modules is merely used as an example for descriptions. During actual application, the functions may be allocated to different functional modules for implementation based on a requirement. In other words, an inner structure of an apparatus is divided into different functional modules to implement all or some of the functions described above.

## Claims

1. An information obtaining method, wherein the method comprises:
extracting a plurality of entity words and an associated word associated with the plurality of entity words from original information content;
generating one or more topics based on the plurality of extracted entity words; and
aggregating corresponding information related to the topic based on entity words and an associated word that correspond to the topic, wherein the one or more topics each comprise at least two entity words.

2. The method according to claim 1, wherein the method further comprises:
receiving a K1 value that is input by a first end user device, wherein the K1 value is used to specify a quantity of entity words of the one or more topics, and K1 is a positive integer greater than 1; and
the generating one or more topics based on the plurality of extracted entity words comprises:
generating the one or more topics based on the plurality of extracted entity words, wherein the one or more topics each comprise K1 entity words.

3. The method according to claim 2, wherein the method further comprises:
sending the one or more topics to a second end user device, wherein the one or more topics comprise a first topic; and
in response to a selection request of the second end user device for the first topic, sending, to the second end user device, one or more pieces of information overview content corresponding to the first topic.

4. The method according to claim 3, wherein the method further comprises:
sending, based on the request, an information link corresponding to the first topic to the second end user device, wherein the information link is used to associate an original information content page corresponding to the one or more pieces of information overview content.

5. The method according to any one of claims 2 to 4, wherein the method further comprises:
receiving a K2 value that is input by the first end user device, wherein K2 is a positive integer greater than 1, and K2 ≠ K1; and
the generating one or more topics based on the plurality of extracted entity words further comprises:
generating the one or more topics based on the plurality of extracted entity words, wherein the one or more topics each comprise K2 entity words.

6. The method according to claim 5, wherein the extracting a plurality of entity words and an associated word from the original information content comprises:
extracting the plurality of entity words and the associated word from the original information content by using a language model, wherein the language model comprises a semantic vector model, an entity word recognition model, and an associated word recognition model.

7. The method according to claim 6, wherein the method further comprises:
obtaining original information from one or more channels based on a crawler information obtaining technology, wherein the original information comprises the original information content and a corresponding information link.

8. The method according to claim 6, wherein the method is used to obtain news information, the original information content is original news content, and the first topic is a news topic.

9. A server, wherein the server comprises:
a communication interface, configured to send and receive a signal;
a memory, configured to store computer program instructions; and
a processor, configured to execute the instructions, so that the server performs the method according to any one of claims 1 to 8.

10. A computer-readable storage medium, wherein the computer-readable storage medium stores computer-executable instructions, and when the computer-executable instructions are executed by a processing circuit, the method according to any one of claims 1 to 8 is implemented.

11. A chip system, wherein the chip system comprises a processing circuit and a storage medium, the storage medium stores instructions, and when the instructions are executed by the processing circuit, the method according to any one of claims 1 to 8 is implemented.
